# EUROPÄISCHE PATENTSCHRIFT

(11) **EP 1 375 306 B1**
(45) Veröffentlichungstag und Bekanntmachung des Hinweises auf die Patenterteilung: **03.09.2008**
(21) Anmeldenummer: 03013846.5
(22) Anmeldetag: 18.06.2003
(51) Int. Cl.: B62D 25/06, B62D 65/00

(54) **Dachmodul für Kraftfahrzeug**
Roof module for automobile
Module de toit pour véhicule automobile

(30) Priorität: 21.06.2002 FR 0207689
(43) Veröffentlichungstag der Anmeldung: 02.01.2004
(73) Patentinhaber: Webasto AG, 82131 Stockdorf (DE)
(72) Erfinder: Cocaign, Jean-Guy, 49280 La Tessoualle (FR)

(56) Entgegenhaltungen:
- EP-A- 1 153 820
- DE-A- 19 956 567
- US-A1- 2002 021 029
- US-B1- 6 331 065

## Beschreibung

Die vorliegende Erfindung betrifft ein Dachmodul zur Abdeckung einer in einem Dach eines Kraftfahrzeugs vorgesehenen Öffnung.

Es ist bekannt, daß das Dach eines Kraftfahrzeugs wenigstens teilweise aus einer Glasscheibe bestehen kann. Normalerweise wird die im Dach vorgesehene Öffnung durch eine als Anschlag dienende Auflagefläche begrenzt, welche zur Aufnahme der Umfangskante der genannten Glasscheibe bestimmt ist. In an sich bekannter Weise erstreckt sich die Öffnung in Querrichtung zwischen den Seiten der Karosserie und in Längsrichtung zwischen einem vorderen, das Dach von der Windschutzscheibe trennenden Dachelement und einem hinteren, das Dach von der Heckscheibe trennenden Element.

In der Praxis wird diese Art von Glasdach üblicherweise in Kombination mit einem System zur Abschattung bzw. Verdunkelung des Tageslichtes verwendet. Ziel ist dabei im wesentlichen eine Begrenzung der Wärmeentwicklung in der Fahrgastzelle an Tagen mit starker Sonneneinstrahlung.

Die Verdunkelung der einen Dachteil bildenden Glasscheibe erfolgt in an sich bekannter Weise durch Öffnung einer Lamelleneinheit oder miteinander verbundener Platten oder einer Jalousieeinheit. Diese Verdunkelungssysteme sind im allgemeinen mechanisiert, weisen also Ausfahrmechanismen, aber auch Führungsmechanismen auf, welche relativ komplex sind und in das Fahrzeug eingebaut werden müssen.

Daraus ergibt sich, daß, wenn der Wunsch besteht, ein Kraftfahrzeug mit einem Glasdach auszustatten, eine große Zahl voneinander unabhängiger Elemente einzubauen ist, nämlich eine Glasscheibe, eine Verdunkelungsvorrichtung, eine Öffnungsvorrichtung, Führungssysteme usw.

Im übrigen müssen die meisten dieser unabhängigen Elemente zusätzlich strukturell untereinander verbunden sein, damit sie die Verdunkelungsfunktion erfüllen, was den Montageprozeß noch weiter verkompliziert.

Damit besteht das durch die Erfindung zu lösende technische Problem darin, ein Fertigbauteil bzw. Ausstattungsmodul vorzuschlagen, welches dazu bestimmt ist, eine in einem Dach eines Kraftfahrzeuges angebrachte Öffnung zu verschließen, wobei die genannte Öffnung sich quer zwischen zwei seitlichen Dachelementen und in Längsrichtung zwischen einem vorderen Dachelement und einem hinteren Dachelement erstreckt, wobei die genannten seitlichen Dachelemente, das genannte vordere Dachelement und das genannte hintere Dachelement jeweils an ihren an der Öffnung liegenden Rändern einen Umfangsanschlag aufweisen, und das vorgeschlagene Dachmodul es gestatten müßte, die Probleme nach dem Stand der Technik zu vermeiden, indem es insbesondere eine wesentliche Vereinfachung der Einbauarbeiten bietet und dabei gleichzeitig eine bedeutende Verkürzung der Montagezeiten am Kraftfahrzeug sicherstellt.

Aus dem Stand der Technik ist beispielsweise die US 2002/0021029 A1 bekannt, welche ein Dachmodul, gemäß dem oberbegriff des Anpruchs 1, offenbart, welches dazu gedacht ist, eine Öffnung in einem Kraftfahrzeugdach abzudecken. Dieses Dachmodul weist eine transparente äußere Schicht auf, welche das eigentliche transparente Dach bildet, und eine innere Schicht, welche mit der äußeren Schicht verbunden ist, und einen Rahmen für die äußere Schicht bildet. In die innere Schicht ist außerdem mittels Halteelementen eine Verdunkelungsvorrichtung integriert.

Die erfindungsgemäße Lösung des bestehenden technischen Problems besteht darin, daß das Dachmodul aufweist:
- eine Glasscheibe, welche geeignet ist, mit den die Öffnung abgrenzenden Umfangsanschlägen fest verbunden zu werden,
- eine Verdunkelungsvorrichtung, welche in der Lage ist, sich parallel zur Innenfläche der Glasscheibe zu entfalten,
- zwei mit der Innenfläche und jeweils längs jeder Seitenkante der Glasscheibe fest verbundene Führungsmittel, wobei die genannten Führungsmittel mit den freien Enden der Verdunkelungsvorrichtung zusammenwirken,
- eine auf der Innenfläche und längs der entweder vorderen oder hinteren Querkante der Glasscheibe befestigte Tragstrebe, wobei die genannte Tragstrebe ein Motor-Vorgelege für den Antrieb der Verdunkelungsvorrichtung trägt.

Die so definiert Erfindung weist den Vorteil auf, eine vollständige Untereinheit zu bilden, welche auch montagefertig ist, d.h. also eine funktionsbereite und geprüfte Vorrichtung. Bei einem Automobilmontageband ermöglicht es diese modulare Struktur, die Montage eines Glasdachs im Dach eines Kraftfahrzeuges extrem zu vereinfachen. Der Prozeß der Anbringung des erfindungsgemäßen Dachmoduls ist in der Tat auf einen einzigen Vorgang beschränkt, der allein darin besteht, die Glasscheibe mit der Karosserie fest zu verbinden. Der Gewinn hinsichtlich der Einbauzeit ist damit beträchtlich, was in der Automobilindustrie, wo Produktivität ein Synonym wirtschaftlicher Wettbewerbsfähigkeit ist, einen wirklich ganz entscheidenden Vorteil darstellt.

Die Erfindung betrifft des weiteren Merkmale, welche sich aus der folgenden Beschreibung ergeben und die jeweils einzeln oder nach ihren sämtlichen technisch möglichen Kombinationen zu betrachten sind.

Diese als nicht einschränkendes Beispiel gegebene Beschreibung macht besser verständlich, wie die Erfindung realisiert werden kann, und in der Beschreibung wird auf die beigefügten Zeichnungen Bezug genommen, in den Zeichnungen:
Figur 1 eine perspektivische Teilansicht mit der Darstellung der Montage eines Dachmoduls nach der Erfindung an einem Kraftfahrzeug ist,
Figur 2 eine teilweise Querschnittsansicht eines Dachmoduls nach der Erfindung darstellt,
Figur 3 einen teilweisen Längsschnitt eines Dachmoduls nach einer besonderen Ausführungsform nach der Erfindung bildet,
Figur 4 im teilweisen Längsschnitt ein Dachmodul nach einer anderen als der in Figur 3 dargestellten Ausführungsform der Erfindung zeigt.

Aus Gründen der Klarheit werden die jeweils gleichen Elemente mit identischen Bezugszeichen bezeichnet. Des weiteren werden lediglich die für das Verständnis der Erfindung wesentlichen Elemente dargestellt, wobei dies auch nicht maßstabgerecht und nur in schematischer Form erfolgte.

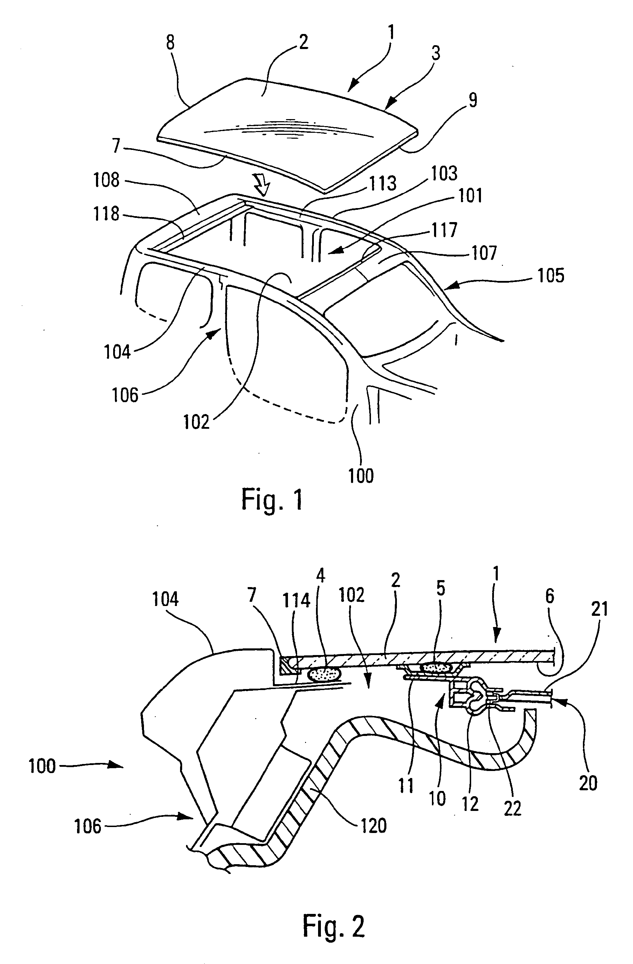

Fig. 1 zeigt ein Kraftfahrzeug 100, in dessen Dach 101 eine Öffnung 102 angebracht wurde, welche dazu bestimmt ist, ein Dachmodul 1 nach der Erfindung aufzunehmen. Die Öffnung 102 wird in Querrichtung durch zwei seitliche Dachelemente 103, 104 begrenzt, die jeweils auf jeder Karosserieseite 105, 106 befestigt sind. In Längsrichtung wird die Öffnung 102 durch ein vorderes Dachelement 107 und ein hinteres Dachelement 108 begrenzt. Jedes der genannten Dachelemente 103, 104, 107, 108 weist jeweils einen Anschlag 113, 114, 117, 118 auf, der längs seines Innenrandes angeordnet ist, d.h. also längs dem Rand, die an der Öffnung 102 verläuft. Das Ganze ist so ausgestaltet, daß die vier Anschläge 113, 114, 117, 118 eine kontinuierliche Aufnahme bilden, welche geeignet ist, das Dachmodul 1, genauer gesagt, den Außenrand 3 einer das Dach bildenden Glasscheibe 2 aufzunehmen.

Bei der in der Figur 2 dargestellten Ausführungsform wird die Befestigung des Dachmoduls 1 am Dach 101 des Fahrzeuges 100 dadurch realisiert, daß die Gesamtheit des Umfangs 3 der Glasscheibe 2 auf die vier Umfangsanschläge 113, 114, 117, 118, die kontinuierlich angeordnet sind, aufgeklebt wird.

Insbesondere ist in der genannten Figur 2 zu sehen, daß die Glasscheibe 2 mit dem Anschlag 114 des seitlichen Dachelements 104 mittels Klebers 4 fest verbunden wird. Die Klebung ist auf der gesamten Länge der Seitenkante 7 der Glasscheibe 2 kontinuierlich, damit die Verbindung mit dem Anschlag 114 vollständig dicht ist.

Eine Verdunkelungsvorrichtung mit Lamellen oder Scheiben 20, die im vorliegenden Beispiel teilweise dargestellt wird, ist vorgesehen, um zu verhindern, daß das Licht in den Innenraum eindringt. Die genannte Verdunkelungsvorrichtung 20 mit Lamellen oder Scheibenelementen ist eine Verdunkelungsvorrichtung eines beliebigen an sich bekannten Typs, der hier nicht beschrieben werden muß. Damit diese Verdunkelungsvorrichtung mit Lamellen 20 parallel zur Innenfläche 6 der Glasscheibe 2 ausgefahren werden kann, und zwar in einer zur Ebene der Figur senkrechten Richtung, sind beiderseits des Glasdaches 2 Führungsmittel 10 vorgesehen.

Jedes Führungsmittel 10 wird vorteilhafterweise durch Verkleben 5 auf der Innenfläche 6 der Glasscheibe 2 jeweils längs der Seitenkanten 7 befestigt.

Bei diesem besonderen Ausführungsbeispiel weist das Führungsmittel 10 eine Längsstrebe 11 auf, die direkt auf der Innenfläche 6 der Glasscheibe 2 im wesentlichen parallel zum Seitenrand 7 aufgeklebt wird. Die genannte Längsstrebe 11 trägt eine Führungsschiene 12, welche ebenfalls in Längsrichtung verläuft und geeignet ist, in an sich bekannter Weise mit dem entsprechenden seitlichen Ende 22 eines Spriegels bzw. Querstabes 21 zusammenzuwirken, der am freien Ende der Verdunkelungsvorrichtung mit Lamellen 20 befestigt ist.

Die Verbindung zwischen der Glasscheibe 2 und jedem seitlichen Anschlag 113, 114 sowie jedes Führungsmittels 10 werden hier gegenüber eventuellen Insassen des Kraftfahrzeuges 100 durch eine Innenverkleidung 120 kaschiert.

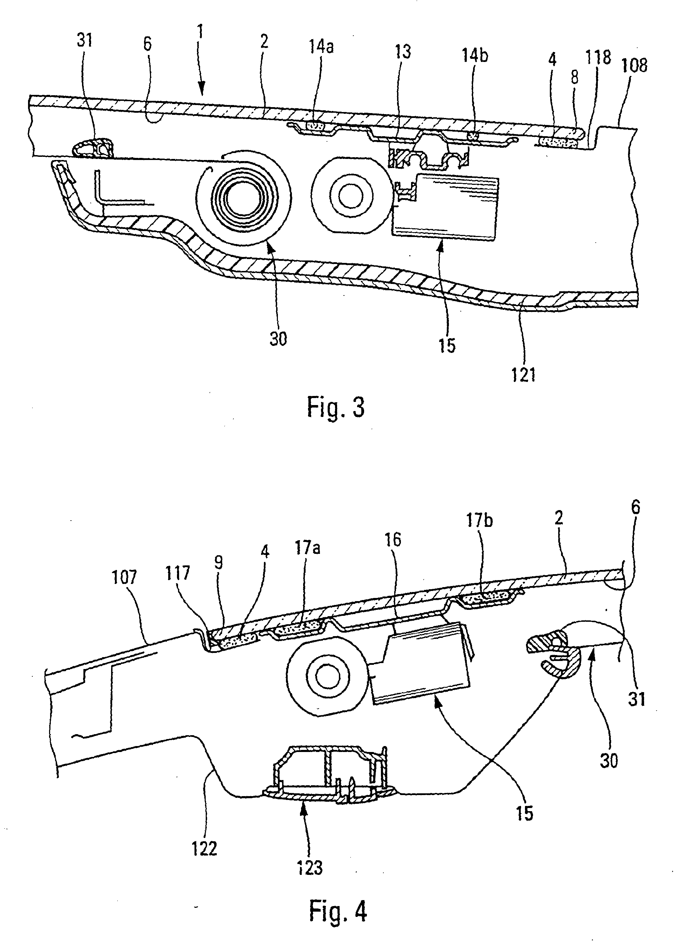

Erfindungsgemäß weist das Dachmodul 1 nach Figur 3 eine Tragstrebe 13 auf, die auf der Innenfläche 6 der Glasscheibe 2 hinter dieser befestigt ist und ein Getriebemotor 15 aufweist, welcher die Bewegung einer vorhangartigen Verdunkelungsvorrichtung 30 steuert, die in einer zur Ebene der Figur parallelen Richtung ausgefahren wird.

Die Verdunkelungsvorrichtung 30 ist ebenso wie das Motor-Vorgelege 15 mit der Strebe 13 fest verbunden. Es handelt sich um eine vorhangartige Verdunkelungsvorrichtung 30 von an sich bekanntem Typ, die hier nicht beschrieben werden muß. Ebenso wie bei der oben beschriebenen Verdunkelungsvorrichtung mit Lamellen 20 weist die vorhangartige Verdunkelungsvorrichtung 30 einen Querstab 31 auf, der am freien Ende des Vorhangs befestigt ist und dessen (nicht dargestellte) seitliche Enden in den Führungsschienen 12 geführt werden.

Bei diesem besonderen Ausführungsbeispiel ist die Querstrebe 13 längs der hinteren Seitenkante 8 der Glasscheibe 2 befestigt. Die Verdunkelungsvorrichtung 30, die bei diesem Ausführungsbeispiel von vorhangartigem Typ ist, muß demzufolge von hinten nach vorne ausgefahren werden, damit die Glasscheibe 2 abgedunkelt wird. Die Querstrebe 13 wird hier vorteilhafterweise mittels Klebers 14a, 14b mit der Glasscheibe 2 verbunden. Das Verkleben kann hier über die gesamte Länge der Querstrebe 13 punktuell oder kontinuierlich erfolgen.

Die Verbindung zwischen der Glasscheibe 2 und dem hinteren Anschlag 118 sowie dem Bausatz Querstrebe 13/Getriebemotor 15/Verdunkelungsvorrichtung 30 ist hier gegenüber eventuellen Insassen des Fahrzeuges 100, wie vorstehend beschrieben, durch eine Innenverkleidung 121 kaschiert. Letztere kann natürlich mit seitlichen Verkleidungen 120 fest verbunden sein und mit diesen ein und dasselbe Werkstück bilden.

Bei der in der Figur 4 dargestellten Ausführungsvariante ist die das Motor-Vorgelege 15 tragende vordere Strebe 16 durch Verklebung 17a, 17b auf der Innenfläche 6 und längs der vorderen Querkante 9 der Glasscheibe 2 befestigt.

Auch in diesem Fall ist die Verdunkelungsvorrichtung 30 mit der Strebe 16 fest verbunden.

Die Gesamtheit dieser Elemente wird gegenüber eventuellen Insassen des Fahrzeuges 100 durch eine Innenverkleidung 122 kaschiert, die bei diesem Ausführungsbeispiel eine Deckenleuchte 123 aufnimmt. Wie vorstehend kann die genannte Verkleidung 122 mit der seitlichen Verkleidung 120 fest verbunden sein, welche gegebenenfalls ihrerseits mit der hinteren Verkleidung 121 fest verbunden ist, womit also ein einziges bzw. zusammenhängendes Werkstück gebildet wird.

Es wurde also vorstehend eine Modulareinheit beschrieben, die aus einem Glasdach besteht, auf dessen unterer Seite sämtliche entsprechenden Zubehörelemente befestigt sind: die Verdunkelungsvorrichtung mit Lamellen 20 (Figur 2) oder vom Vorhangtyp (Figuren 3 und 4); das Motor-Vorgelege 15 zur Steuerung der Bewegung der Verdunkelungsvorrichtung 20, 30, welches auf einer vorderen Strebe 16 (Figur 4) oder hinteren Strebe 13 (Figur 3) befestigt ist, seitliche Führungsmittel 10, usw.

Natürlich treibt das Motor-Vorgelege 15 (nicht dargestellte) Kabel an, die sich in Querrohren 18 (Figur 3) und Längsrohren 19 (Figur 2) bewegen, welche in den Streben 13, 16 und den Führungen 10 vorgesehen sind und in an sich bekannter Weise an den seitlichen Enden der Querstäbe 21, 31 befestigt sind.

Eine solche modulare Einheit kann an den Kanten der Öffnung 102 mühelos in einem Stück eingesetzt und fixiert werden.

Selbstverständlich ist die vorliegende Erfindung nicht auf die vorstehend beschriebenen Ausführungsformen beschränkt, vielmehr können an diesen zahlreiche Änderungen und Varianten angebracht werden, ohne den Erfindungsrahmen zu verlassen.

## Patentansprüche

1. Dachmodul (1), welches dazu bestimmt ist, eine in einem Dach (101) eines Kraftfahrzeuges (100) angebrachte Öffnung (102) abzudecken, wobei die genannte Öffnung (102) sich in Querrichtung zwischen zwei seitlichen Dachelementen (103, 104) und in Längsrichtung zwischen einem vorderen Dachelement (107) und einem hinteren Dachelement (108) erstreckt und die genannten seitlichen Dachelemente (103, 104), das genannte Dachelement (107) und das genannte hintere Dachelement (108) jeweils einen Umfangsanschlag (113, 114, 117, 118) an ihren an der Öffnung (102) gelegenen Kanten aufweisen, wobei das Dachmodul (1) eine Einbaueinheit bildet, welche aufweist:
- eine Glasscheibe (2), welche geeignet ist, an den die Öffnung (102) abgrenzenden Umfangsanschlägen (113, 114, 117, 118) befestigt zu werden,
- eine Verdunkelungsvorrichtung (20, 30), welche in der Lage ist, parallel zur Innenfläche (6) der Glasscheibe (2) auszufahren, zwei Führungsmittel (10), welche auf der Innenfläche (6) bzw. jeweils längs jedes Seitenrandes (7) der Glasscheibe (2) befestigt sind, wobei die genannten Führungsmittel (10) mit dem freien Ende (21, 31) der Verdunkelungsvorrichtung (20, 30) zusammenwirken,
- eine Tragstrebe (13, 16), welche auf der Innenfläche (6) und längs entweder der vorderen (9) oder der hinteren (8) Querkante der Glasscheibe (2) befestigt ist, wobei die genannte Tragstrebe (13, 16) ein Motor-Vorgelege (15) zum Antrieb der Verdunkelungsvorrichtung (20, 30) aufweist,
wobei jedes Führungsmittel (10) auf der Innenfläche (6) der Glasscheibe (2) durch Verkleben (5) befestigt wird,
**dadurch gekennzeichnet, dass**
die Tragstrebe (13, 16) auf der Innenfläche (6) der Glasscheibe (2) durch Verkleben (14a, 14b; 17a, 17b) befestigt wird, dass die Verdunkelungsvorrichtung vom Typ Verdunkelungsvorrichtung mit Lamellen (20) ist, welche mit einer Strebe (11, 16) fest verbunden ist, und dass die Verdunkelungsvorrichtung vom Typ vorhangartiger Verdunkelungsvorrichtung (30) ist, welche mit einer Strebe (13) fest verbunden ist.

2. Dachmodul (1) nach Anspruch 1, **dadurch gekenntzeichnet**, daß die Glasscheibe (2) an den Umfangsanschlägen (113,114.117,118) durch Verkleben (4) befestigt wird.

## Claims

1. Roof module (1) which is intended to cover an opening (102) provided in a roof (101) of a motor vehicle (100), wherein the abovementioned opening (102) extends in the transverse direction between two lateral roof elements (103, 104) and in the longitudinal direction between a front roof element (107) and a rear roof element (108), and the abovementioned lateral roof elements (103, 104), the abovementioned roof element (107) and the abovementioned rear roof element (108) each have a circumferential stop (113, 114, 117, 118) on their edges positioned on the opening (102), wherein the roof module (1) forms a built-in unit which has:
- a glass pane (2) which is suitable to be fastened to the circumferential stops (113, 114, 117, 118) bounding the opening (102),
- a darkening device (20, 30) which can be extended parallel to the inner surface (6) of the glass pane (2), two guide means (10) which are fastened to the inner surface (6) or in each case along each side border (7) of the glass pane (2), with the abovementioned guide means (10) interacting with the free end (21, 31) of the darkening device (20, 30),
- a supporting strut (13, 16) which is fastened to the inner surface (6) and along either the front transverse edge (9) or the rear transverse edge (8) of the glass pane (2), the abovementioned supporting strut (13, 16) having a motor reduction gearing (15) for driving the darkening device (20, 30), and each guide means (10) being fastened to the inner surface (6) of the glass pane (2) by means of adhesive bonding (5),
**characterized**
**in that** the supporting strut (13, 16) is fastened to the inner surface (6) of the glass pane (2) by means of adhesive bonding (14a, 14b; 17a, 17b), in that the darkening device is of the type of darkening device with louvers (20) and which is connected fixedly to a strut (11, 16), and in that the darkening device is of the type of curtain-like darkening device (30) which is connected fixedly to a strut (13).

2. Roof module (1) according to Claim 1, **characterized in that** the glass pane (2) is fastened to the circumferential stops (113, 114, 117, 118) by means of adhesive bonding (4).

## Revendications

1. Module de toit (1) prévu pour recouvrir une ouverture (102) pratiquée dans un toit (101) d'un véhicule automobile (100), ladite ouverture (102) s'étendant dans la direction transversale entre deux éléments de toit latéraux (103, 104) et dans la direction longitudinale entre un élément de toit avant (107) et un élément de toit arrière (108), et lesdits éléments de toit latéraux (103, 104), ledit élément de toit (107) et ledit élément de toit arrière (108) présentant à chaque fois une butée périphérique (113, 114, 117, 118) sur leurs arêtes situées au niveau de l'ouverture (102), le module de toit (1) formant une unité d'installation qui présente :
- une vitre en verre (2) qui est appropriée pour être fixée sur les butées périphériques (113, 114, 117, 118) délimitant l'ouverture (102),
- un dispositif d'ombrage (20, 30) qui est en mesure d'être déployé parallèlement à la surface interne (6) de la vitre en verre (2), deux moyens de guidage (10) qui sont fixés sur la surface interne (6) ou à chaque fois le long de chaque bord latéral (7) de la vitre en verre (2), lesdits moyens de guidage (10) coopérant avec l'extrémité libre (21, 31) du dispositif d'ombrage (20, 30),
- un montant porteur (13, 16) qui est fixé sur la surface interne (6) et le long de l'arête transversale avant (9) ou arrière (8) de la vitre en verre (2), ledit montant porteur (13, 16) présentant un engrenage à moteur (15) pour l'entraînement du dispositif d'ombrage (20, 30),
chaque moyen de guidage (10) étant fixé sur la surface interne (6) de la vitre en verre (2) par collage (5),
**caractérisé en ce que**
le montant porteur (13, 16) est fixé sur la surface interne (6) de la vitre en verre (2) par collage (14a, 14b ; 17a, 17b), **en ce que** le dispositif d'ombrage est du type d'un dispositif d'ombrage à lamelles (20), qui est connecté fixement à un montant (11, 16) et **en ce que** le dispositif d'ombrage est du type d'un dispositif d'ombrage à rideau (30), qui est connecté fixement à un montant (13).

2. Module de toit (1) selon la revendication 1, **caractérisé en ce que** la vitre en verre (2) est fixée sur les butées périphériques (113, 114, 117, 118) par collage (4).
